# DEMANDE DE BREVET EUROPEEN

(11) **EP 0 916 255 A1**
(43) Date de publication de la demande: **19.05.1999**
(21) Numéro de dépôt: 98203661.8
(22) Date de dépôt: 29.10.1998
(51) Int. Cl.: A01G 9/02

(54) **Ensemble de bacs à fleurs, procédé pour réaliser un tel ensemble de bacs à fleurs, et paroi construite à partir de ce dernier**

(30) Priorité: 13.11.1997 BE 9700909
(71) Demandeur: Marlux N.V., 3980 Tessenderlo (BE)
(72) Inventeur: Vael, Dirk Aimé Annie Marcel, 8300 Knokke-Heist (BE)
(74) Mandataire: Donné, Eddy

(57) **Abrégé**

Ensemble de bacs à fleurs, du type qui est constitué, d'une part, par un support (2) sous la forme d'un récipient avec lequel on peut former, par entassement, des parois de plantation et, d'autre part, par un ou plusieurs accessoires (3-4-5) qui peuvent coopérer avec le support (2), caractérisé en ce qu'un ou plusieurs des accessoires précités (3-4-5) sont fixés au support (2) de manière à pouvoir être détachés et/ou enlevés.

## Description

La présente invention concerne un ensemble de bacs à fleurs, ainsi qu'un procédé pour réaliser un tel ensemble de bacs à fleurs et une paroi qui est construite à partir d'ensembles de bacs à fleurs de ce type.

Plus spécifiquement, l'invention concerne un ensemble de bacs à fleurs également désigné par le terme "anneau végétal", avec lequel on peut former par entassement des parois de plantation.

En particulier, elle concerne des ensembles de bacs à fleurs qui sont réalisés en béton, par exemple en béton qui a été soumis à des vibrations; toutefois, en général, on peut également utiliser d'autres matières telles que de l'argile à cuire et analogues.

Il est connu de composer des ensembles de bacs à fleurs de ce type à partir, d'une part, d'un support annulaire et, d'autre part, d'un ou de plusieurs accessoires sous la forme de parties inférieures. Ces accessoires sont réalisés séparément et sont commercialisés sous forme d'un seul ensemble de manière conjointe avec le support annulaire. En fonction de l'utilisation, plus spécifiquement du type d'entassement des supports, on peut déposer de manière sélective une ou plusieurs parties inférieures dans le support ou bien on peut même se passer de ces parties inférieures.

Un inconvénient lié à ces ensembles de bacs à fleurs réside dans le fait que les supports et les parties inférieures sont isolés l'un de l'autre, si bien qu'ils peuvent se séparer.

Un inconvénient supplémentaire lié à ces ensembles de bacs à fleurs connus se manifeste lors de la production et est lié au fait que des productions séparées sont requises d'une part pour les supports et, d'autre part, pour les accessoires. Ceci requiert des temps de transformation sur les machines de production et peut donner lieu à des différences de couleurs entre les supports d'une part et les accessoires d'autre part.

L'invention a pour objet un ensemble de bacs à fleurs par lequel on supprime un ou plusieurs des inconvénients précités, ainsi que d'autres.

A cet effet, l'invention concerne un ensemble de bacs à fleurs, du type qui est constitué, d'une part, par un support sous la forme d'un récipient avec lequel on peut former, par entassement, des parois de plantation et, d'autre part, par un ou plusieurs accessoires qui peuvent coopérer avec le support, caractérisé en ce qu'un ou plusieurs des accessoires précités sont fixés au support de manière à pouvoir être détachés.

Par le fait que les accessoires sont fixés au support de façon à pouvoir être détachés, ils ne peuvent se perdre tant qu'ils ne sont pas détachés. On n'a pas besoin non plus d'une manipulation séparée des accessoires lors de la commercialisation et du transport pour autant, toutefois, qu'on laisse les accessoires fixés au support.

Les accessoires selon l'invention peuvent également être constitués par les parties inférieures habituelles; toutefois, ils peuvent également être constitués par d'autres éléments qui peuvent coopérer avec le support d'une manière ou d'une autre.

Conformément à une caractéristique particulière, l'ensemble de bacs à fleurs comprendra un ou plusieurs accessoires aptes à être détachés sous la forme de parties de parois qui peuvent venir s'appliquer entre deux supports placés l'un à côté de l'autre et à l'écart l'un de l'autre.

Une telle partie de paroi offre l'avantage qu'à partir des ensembles de bacs à fleurs correspondants, on peut construire des parois par lesquelles les supports utilisés peuvent être placés à l'écart l'un de l'autre, si bien que, pour la formation d'une telle paroi, on n'a besoin d'un nombre inférieur d'ensembles de bacs à fleurs que dans le cas où les supports sont placés directement l'un à côté de l'autre.

Il y a lieu d'indiquer également qu'un avantage lié à une telle partie de paroi réside dans le fait de la livrer, non pas de manière apte à être détachée, mais dès le début à l'état détaché de l'ensemble. L'invention concerne par conséquent également un ensemble de bacs à fleurs caractérisé en ce qu'il est constitué par la combinaison d'un support qui est destiné à être utilisé comme bac à fleurs et avec lequel, par entassement, on peut former des parois de plantation, et d'au moins une partie de paroi appropriée qui peut venir s'appliquer entre deux supports placés l'un à côté de l'autre et à l'écart l'un de l'autre, de préférence dans des évidements prévus spécialement à cet effet dans les supports.

Enfin, l'invention concerne également un procédé pour la réalisation d'un ensemble de bacs à fleurs de ce type, caractérisé en ce que ledit ensemble de bacs à fleurs est réalisé en béton, éventuellement en béton en plusieurs couches pour obtenir des nuances de couleurs, par lequel ce béton est soumis à des vibrations dans une matrice, par lequel la production de tous les éléments a lieu de manière conjointe en un seul cycle, en d'autres termes, par lequel on forme le support et les accessoires correspondants en un seul et même traitement par pression, l'avantage étant que l'on ne doit pas procéder à des manipulations de production séparées pour les accessoires.

Dans le but de mieux indiquer les caractéristiques selon l'invention, on décrit ci-après, à titre d'exemple, sans aucun caractère limitatif, une forme de réalisation préférée en se référant aux dessins annexés dans lesquels:
la figure 1 représente l'ensemble de bacs à fleurs de l'invention dans une vue prise d'en haut;
les figures 2 et 3 représentent des vues prises le long des flèches F2 et F3 en figure 1;
les figures 4, 5 et 6 représentent des coupes transversales prises le long des lignes IV-IV, V-V et VI-VI en figure 1;
la figure 7 représente une vue analogue à celle de la figure 1, mais après avoir détaché et retiré les accessoires;
les figures 8 et 9 représentent respectivement une des parties inférieures détachées, ainsi qu'une partie de paroi détachée;
la figure 10 représente, dans une vue prise d'en haut, la manière dont on peut monter différents ensembles de bacs à fleurs les uns à côté des autres dans le but de former une paroi, la couche inférieure étant représentée en pointillé;
la figure 11 représente une vue prise le long de la flèche F11 en figure 10 d'une seule couche de la paroi;
la figure 12 représente une vue en coupe transversale prise le long de la ligne XII-XII en figure 10;
la figure 13 représente encore une réalisation de l'ensemble de bacs à fleurs de la figure 1;
la figure 14 représente, à une plus grande échelle, une variante de la partie indiquée par F14 en figure 1.

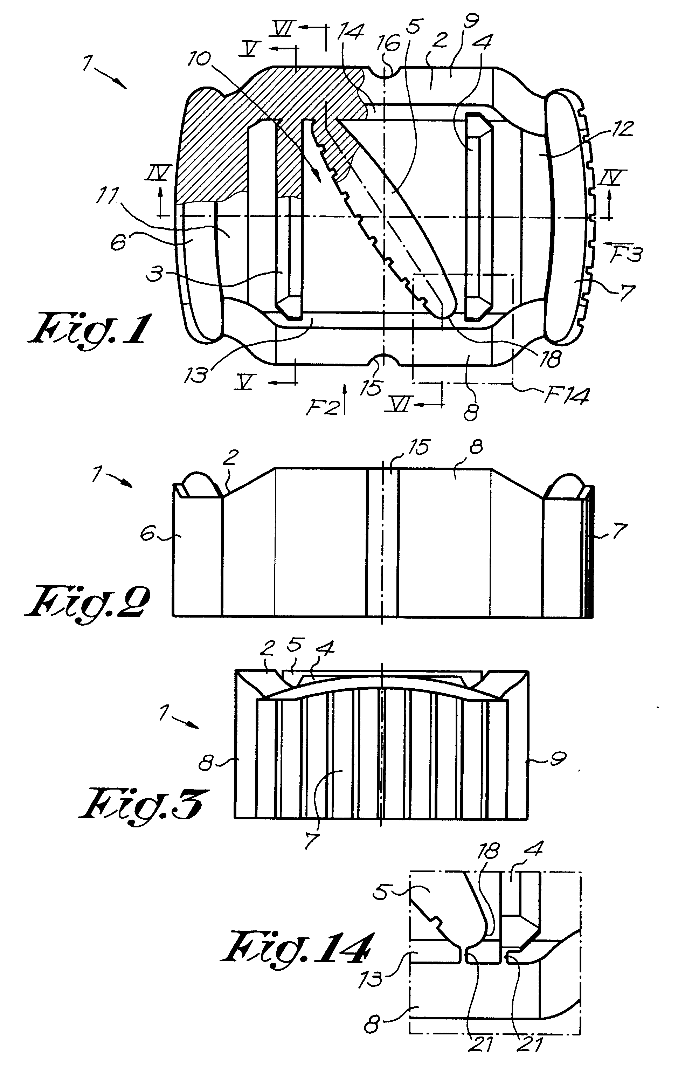

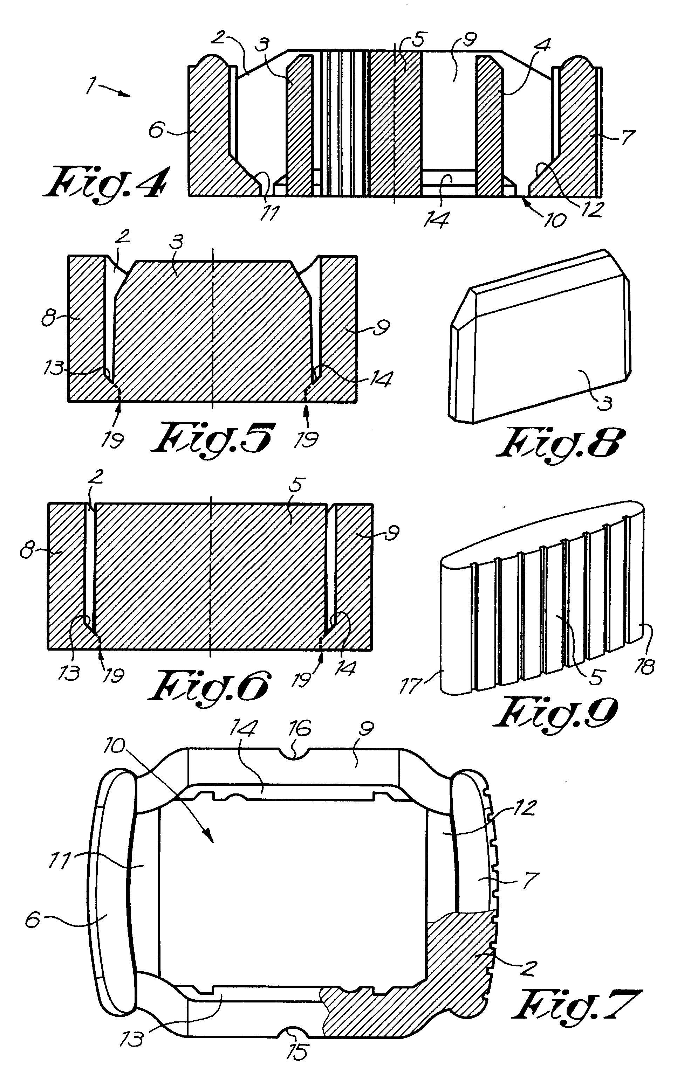

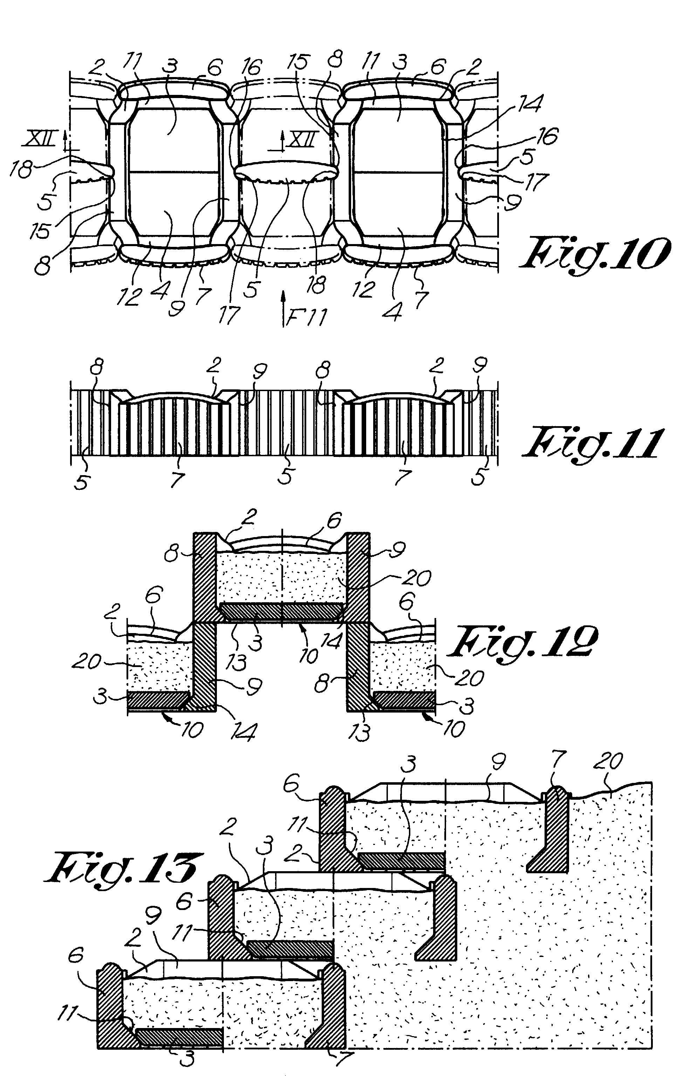

Comme représenté dans les figures 1 à 9, l'invention concerne un ensemble de bacs à fleurs 1 qui est constitué, d'une part, par un support 2 sous la forme d'un récipient et, d'autre part, par un ou plusieurs accessoires, dans le cas présent par deux parties inférieures 3-4 et par une partie de paroi 5 décrite plus en détail ci-après, qui peuvent coopérer avec le support 2.

Le support 2 est constitué principalement d'une structure annulaire constituée par deux parois supérieures opposées 6-7 et par deux parois latérales 8-9 entre lesquelles est disposé un fond ouvert désigné ci-après par l'expression "ouverture inférieure 10". En dessous de la structure annulaire, sont présents des moyens de soutien qui permettent de placer les parties inférieures 3-4 précitées dans le support 2. Dans l'exemple représenté, ces moyens de soutien sont constitués par des bords de soutien 11-12-13-14 faisant saillie vers l'intérieur, qui se trouvent à proximité du côté inférieur des parois précitées 6-7-8-9. Ces bords de soutien peuvent, comme représenté, être réalisés en continu ou, selon une variante, être interrompus.

Les parties inférieures 3 et 4 sont réalisées principalement sous la forme de plaques qui s'étendent respectivement à l'état déposé sur approximativement la moitié de la surface du fond, si bien que l'ouverture inférieure précitée 10 est obturée de manière complète ou pratiquement complète lorsque les deux parties inférieures 3-4 sont appliquées l'une à côté de l'autre dans le support 2.

La partie de paroi précitée 5 est constituée également principalement d'un élément en forme de plaque. Cette partie de paroi 5 est réalisée de telle sorte qu'elle peut venir s'appliquer entre deux supports 2 disposés l'un à côté de l'autre et à l'écart l'un de l'autre, comme représenté par exemple dans les figures 10 et 11.

Le support 2 est muni, sur le côté externe de ses parois latérales 8-9, de sièges, plus spécifiquement d'évidements 15-16 dans lesquels peuvent venir s'appliquer des parties de parois 5 avec leurs bords latéraux 17-18, par lequel ces évidements 15-16 s'étendent principalement à la verticale et sont situés au milieu des parois latérales correspondantes 8-9.

Une caractéristique essentielle de l'invention réside dans le fait que les accessoires précités, dans le cas présent, les parties inférieures 3-4 et la partie de paroi 5, sont fixés au support 2 de manière à pouvoir être détachés et/ou enlevés.

Plus spécifiquement, les accessoires aptes à être détachés, comme représenté pour la partie inférieure 3 en figure 5 et pour la partie de paroi 5 en figure 6, sont fixés au support 2 via des parties de matières 19 faibles par rapport à la matière environnante et aptes à être cassées.

Comme représenté, les accessoires, c'est-à-dire les parties inférieures 3-4 et la partie de paroi 5, sont fixés à cet effet de préférence sur les bords de soutien 13 et 14, en d'autres termes, ils sont réalisés en une seule pièce avec le support 2 de telle sorte que les seuls points de liaison se trouvent à l'endroit occupé par les bords de soutien 13-14.

Comme représenté dans l'exemple des dessins, il est préférable que les accessoires correspondants, c'est-à-dire les parties inférieures 3-4 et la partie de paroi 5, soient disposés à l'intérieur du contour annulaire du support 2 et de préférence également à l'intérieur du contour externe complet, en d'autres termes de telle sorte que les accessoires ne fassent saillie ni latéralement, ni vers le bas, ni vers le haut par rapport au support 2. Ainsi, on obtient l'avantage que le risque d'un contact accidentel des accessoires avec d'autres objets lors du transport ou analogues est très minime et que le risque d'un détachement involontaire des accessoires est par conséquent également minimal.

Les parties inférieures 3-4 et la partie de paroi 5 sont placées dans leur état apte à être détaché, en étant dressées dans le support 2. Ainsi, il est possible de réaliser le tout en un seul traitement, plus spécifiquement en une seule configuration à l'aide d'une matrice.

Dans le cas où l'ensemble de bacs à fleurs 1, comme représenté dans les figures, est muni d'au moins trois accessoires, d'une part les deux parties inférieures précitées 3-4 et d'autre part une seule partie de paroi 5 comme indiquée ci-dessus, les deux parties inférieurs 3-4 peuvent venir s'appliquer, comme représenté à l'état apte à être détaché, en étant dressées et en position parallèle dans le support 2, si bien qu'ils sont également disposés parallèlement aux parois supérieures 6-7, tandis que la partie de paroi précitée 5 est placée également à l'état dressé, mais en position diagonale entre les parties inférieures 3-4.

Toutefois, il est clair qu'en fonction de la forme de réalisation à mettre en oeuvre et des circonstances concrètes de fabrication, les accessoires peuvent également être appliqués d'une autre manière dans le support 2, par exemple tous parallèlement l'un à l'autre. Au lieu de les appliquer parallèlement aux parois supérieures 6-7, on peut également les appliquer parallèlement aux parois latérales 8-9.

Comme représenté dans l'exemple des figures, les côtés externes des parois supérieures 6-7 peuvent être réalisés avec une configuration différente; on obtient cette caractéristique en réalisant la paroi 6 à l'aide d'une surface lisse, tandis que la paroi 7 est profilée, plus spécifiquement est munie d'une surface nervurée. D'une part, on obtient ainsi le fait qu'en plaçant les supports dans l'une ou l'autre direction, on peut obtenir des aspects visuels différents. D'autre part, on obtient également la possibilité de choisir entre une surface lisse et une surface nervurée, si bien que la surface lisse peut être entretenue plus facilement, tandis que la surface nervurée offre à nouveau l'avantage d'une meilleure adhérence pour des plantes grimpantes et analogues.

La partie de paroi 5 peut, de la même manière, être munie de part et d'autre de surfaces de configuration différente, comme il ressort des figures.

La fabrication et l'utilisation des ensembles de bacs à fleurs 1 sont telles qu'indiquées ci-après.

Lors de la fabrication, on forme l'ensemble de bacs à fleurs de la figure 1 en une seule pièce. Par le fait que les accessoires se trouvent à l'état dressé, on peut mettre en oeuvre cette réalisation simplement en comprimant du béton et en le faisant vibrer, dans une seule et même matrice, en un seul cycle.

Après avoir retiré le produit de la matrice et après l'avoir laissé prendre, on peut le manipuler.

L'utilisateur peut enlever simplement les accessoires en les détachant à la main ou en les retirant du support 2 à l'aide d'un coup de marteau ou analogues frappé avec précaution en direction verticale. Après avoir retiré les accessoires, le support 2 présente la forme telle que représentée en figure 7. Les accessoires obtenus sont représentés en perspective dans les figures 8 et 9.

Dans les figures 10 à 12, on représente la manière dont on peut placer plusieurs ensembles de bacs à fleurs 1 les uns à côté des autres pour former une paroi. Il est clair que, dans ce montage, les deux parties inférieures 3-4 sont requises pour empêcher que la terre 20 ne tombe des supports 2.

En figure 13, on représente un montage par lequel les supports 2 sont décalés les uns par rapport aux autres sur une demi-longueur et forment une paroi penchée en arrière en inclinaison, par lequel une seule partie inférieure, dans ce cas-ci la partie inférieure 3, suffit par support 2. En l'occurrence, ces parties inférieures ont entre autres pour objet d'empêcher qu'en arrosant les plantes, de la terre est entraînée par l'eau depuis les supports supérieurs jusqu'aux supports inférieurs.

Au lieu de fixer les supports exclusivement aux bords de soutien 13 et 14, on peut également les fixer le long de leurs parois latérales complètes, par exemple à l'aide de parties de matières minces 21, comme représenté en figure 14. Il est clair qu'une telle fixation peut, le cas échéant, également être prévue sur une seule paroi latérale.

Il est clair que l'invention concerne également des ensembles de bacs à fleurs par lesquels des accessoires déterminés sont fixés dans le support de manière à pouvoir être détachés, ainsi que d'autres accessoires réalisés séparément sous forme d'une pièce détachée.

Il n'est également pas exclu de détacher les accessoires du support déjà immédiatement après la production, mais avant la commercialisation.

Il est clair que les supports 2 ne doivent pas nécessairement être rectangulaires, comme représenté dans les figures; ils peuvent prendre n'importe quelles autres formes.

La présente invention n'est en aucune façon limitée aux formes de réalisation décrites à titre d'exemple et représentées dans les figures; un ensemble de bacs à fleurs de ce type peut être réalisé dans différentes formes et dans différentes dimensions sans sortir du cadre de l'invention.

## Revendications

1. Ensemble de bacs à fleurs, du type qui est constitué, d'une part, par un support (2) sous la forme d'un récipient avec lequel on peut former, par entassement, des parois de plantation et, d'autre part, par un ou plusieurs accessoires (3-4-5) qui peuvent coopérer avec le support (2), caractérisé en ce qu'un ou plusieurs des accessoires précités (3-4-5) sont fixés au support (2) de manière à pouvoir être détachés et/ou enlevés.

2. Ensemble de bacs à fleurs selon la revendication 1, caractérisé en ce que les accessoires (3-4-5) aptes à être détachés sont réalisés en une seule pièce avec le support (2), par lequel les accessoires (3-4-5) sont fixés au support (2) via des parties de matières (19-21) faibles aptes à être cassées.

3. Ensemble de bacs à fleurs selon la revendication 1 ou 2, caractérisé en ce que le support (2) est réalisé principalement sous forme annulaire, plus spécifiquement est constitué principalement par des parois dressées entre lesquelles est présent un fond ouvert; en ce que l'ensemble de bacs à fleurs (1) comprend au moins une partie inférieure (3-4) à titre d'accessoire; et en ce que cette partie inférieure (3-4) est fixée au support (2) de façon à pouvoir être détachée, si bien qu'elle peut être déposée après le détachement, à l'état isolé, dans le support (2).

4. Ensemble de bacs à fleurs selon l'une quelconque des revendications précédentes, caractérisé en ce qu'il comprend un accessoire apte à être détaché sous la forme d'une partie de paroi (5) qui peut venir s'appliquer entre deux supports (2) placés l'un à côté de l'autre et à l'écart l'un de l'autre.

5. Ensemble de bacs à fleurs selon l'une quelconque des revendications précédentes, caractérisé en ce que les accessoires correspondants (3-4-5) sont appliqués à l'intérieur du contour annulaire du support (2) et de préférence également à l'intérieur du contour externe complet.

6. Ensemble de bacs à fleurs selon l'une quelconque des revendications précédentes, caractérisé en ce que le support (2) est muni de bords de soutien (13-14) faisant saillie vers l'intérieur, le cas échéant interrompus, pour une ou plusieurs parties inférieures (3-4) et en ce qu'un ou plusieurs des accessoires précités sont fixés sur ces bords de soutien (13-14).

7. Ensemble de bacs à fleurs selon l'une quelconque des revendications précédentes, caractérisé en ce que les accessoires (3-4-5) sont fixés au support (2) à proximité d'un ou de plusieurs bords latéraux de manière à pouvoir être détachés au moyen de parties de matières (21) faibles et aptes à être cassées, qui s'étendent le long des bords latéraux correspondants.

8. Ensemble de bacs à fleurs selon l'une quelconque des revendications précédentes, caractérisé en ce que les accessoires correspondants (3-4-5) sont placés à l'état dressé par rapport au support (2).

9. Ensemble de bacs à fleurs selon l'une quelconque des revendications précédentes, caractérisé en ce qu'il est muni d'au moins trois accessoires, d'une part deux parties inférieures (3-4) et d'autre part une partie de paroi (5) qui peut venir s'appliquer entre deux supports (2) placés l'un à côté de l'autre, par lequel, à l'état apte à être détaché, les deux parties inférieures (3-4) sont appliquées à l'état dressé et parallèlement l'une à l'autre dans le support (2), tandis que la partie de paroi précitée (5) est également placée à l'état dressé, mais en position diagonale entre les parties inférieures (3-4).

10. Ensemble de bacs à fleurs, caractérisé en ce qu'il est constitué par la combinaison d'un support (2) qui est destiné à être utilisé comme bacs à fleurs et avec lequel on peut former, par entassement, des parois de plantation, et au moins par une partie de paroi appropriée qui peut venir s'appliquer entre deux supports (2) placés l'un à côté de l'autre et à l'écart l'un de l'autre.

11. Ensemble de bacs à fleurs selon la revendication 4 ou 10, caractérisé en ce que le support (2) est muni, sur son côté externe, de sièges de préférence sous la forme d'évidements (15-16), dans lesquels les parties de parois précitées (5) peuvent venir s'appliquer avec leurs bords latéraux (17-18), par lequel ces sièges se trouvent de préférence au milieu des parois latérales (8-9) du support correspondant (2).

12. Ensemble de bacs à fleurs selon l'une quelconque des revendications 4, 10 ou 11, caractérisé en ce que le support (2), au même titre que la partie de paroi précitée (5), est muni d'au moins deux parois externes de configuration différente, si bien que l'on peut créer des aspects visuels différents.

13. Ensemble de bacs à fleurs selon l'une quelconque des revendications précédentes, caractérisé en ce qu'il est constitué de béton.

14. Procédé pour la réalisation d'un ensemble de bacs à fleurs selon l'une quelconque des revendications 1 à 9, caractérisé en ce que cet ensemble de bacs à fleurs (1) est réalisé en béton; par lequel on fait vibrer ce béton dans une seule et même matrice; par lequel la production a lieu en un seul cycle; en d'autre termes, par lequel le support (2) et les accessoires correspondants (3-4-5) sont réalisés au cours d'un seul et même traitement par pression.

15. Paroi caractérisée en ce qu'elle est construite via un entassement, les uns à côté des autres et les uns par-dessus les autres, d'ensembles de bacs à fleurs (1) tels que décrits dans l'une quelconque des revendications 1 à 13.
